# EUROPÄISCHE PATENTSCHRIFT

(11) **EP 4 230 331 B1**
(45) Veröffentlichungstag und Bekanntmachung des Hinweises auf die Patenterteilung: **25.11.2026**
(21) Anmeldenummer: 22157784.4
(22) Anmeldetag: 21.02.2022
(51) Int. Cl.: B23B 51/08, B25D 17/02, B25D 17/08, B23B 49/00

(54) **STUFENBOHRWERKZEUG**
STEP DRILLING TOOL
OUTIL DE PERÇAGE ÉTAGÉ

(43) Veröffentlichungstag der Anmeldung: 23.08.2023
(73) Patentinhaber: RANIT-Befestigungssysteme GmbH, 45701 Herten (DE)
(72) Erfinder: Giertulla, Roger, 44651 Herne (DE); Gräwe, Bernd, 45701 Herten (DE)
(74) Vertreter: Kohlmann, Kai

(56) Entgegenhaltungen:
- EP-A1- 2 959 995
- WO-A1-2019/074871
- WO-A1-2021/021858
- CN-A- 110 202 189
- DE-U1- 202008 011 892
- GB-A- 2 547 627

## Beschreibung

Die Erfindung betrifft ein Stufenbohrwerkzeug mit einer Werkzeuglängsachse zum Einbringen von Bohrlöchern mit unterschiedlichen Durchmessern in einen Untergrund und eine an dem Untergrund anliegende Dämmstoffschicht eines Wärmedämmverbundsystems nach dem Oberbegriff des Anspruchs 1.

Bei der Montage von Wärmedämmverbundsystemen wird üblicherweise eine Dämmstoffschicht aus Dämmplatten, beispielsweise aus Polystyrol oder aus hochverdichteter Mineralwolle, auf den Untergrund geklebt, dann verdübelt und anschließend verputzt. Unter dem Begriff "Untergrund" wird neben Fassadenwänden auch jede Art von Unterkonstruktion verstanden, auf die die Dämmplatten montiert werden.

Die Stärke der Dämmstoffschicht in Wärmdämmverbundsystemen nimmt immer weiter zu. Aktuell werden zur Wärmedämmung von Fassaden bereits Dämmplatten aus Polystyrol oder Mineralwolle mit einer Stärke von 120-400mm und sogar darüber hinaus verwendet. Die Dämmplatten werden teilweise mit Dämmstoffdübeln befestigt, die einen abgesetzten Schaft aufweisen. Die Spreizzone weist beispielsweise einen Durchmesser von 8mm auf, an die sich ein erweiterter Schaft mit einem Durchmesser von 12-30mm anschließt. Um derart gestufte Dämmstoffdübel bis in den Untergrund einsetzen zu können, ist es erforderlich eine entsprechend gestufte Bohrung in den Dämmstoff und den Untergrund einzubringen. Zum Einbringen derartiger Bohrungen werden Stufenbohrwerkzeuge verwendet, die mindestens zwei Stufen aufweisen. Die erste Stufe hat ein Maß entsprechend dem benötigten Bohrlochdurchmesser in dem Untergrund, die zweite Stufe ein Maß entsprechend dem Bohrlochdurchmesser in der Dämmplatte.

Aus der DE 295 08 159 U1 ist ein einteiliger Stufenbohrer für Beton und Mauerwerk bekannt, der zwei verschiedene Bohrstufen mit jeweils unterschiedlichen Bohrdurchmessern aufweist.

Ferner bietet die Firma EJOT Baubefestigungen GmbH, In der Stockwiese 35, D-57334 Bad Laasphe einen einteiligen Stufenbohrer zum Durchbohren dickschichtiger Dämmstoffsysteme von Wärmedämmverbundsystemen an, bei dem die zweite Stufe als Fräswerkzeug ausgebildet ist (abgerufen am 18. Februar 2022 unter https://www.ejot.de/Baubefestigungen/Anwendungen/WDVS-Befestigungsl%C3%B6sungen/WDVS-Werkzeuge-%26-Zubeh%C3%B6r/stepdrill/p/Stufenbohrer).

Beim Einbringen von Bohrungen zur Befestigung von Dämmplatten eines Wärmedämmverbundsystems verschleißt die erste Stufe zum Einbringen des Bohrlochs mit geringerem Durchmesser in den Untergrund deutlich schneller als die zweite Stufe zum Einbringen des Bohrlochs in den Dämmstoff. Gleichwohl muss der gesamte einteilige Stufenbohrer getauscht werden, sobald der Bohrkopf des Bohrers der ersten Stufe verschlissen ist. Nachteilig ist außerdem, dass derartige Stufenbohrer als Spezialwerkzeuge an der Baustelle teilweise nicht verfügbar und teuer sind.

Die RANIT Austria GmbH, Feldkreuzweg 13, A-6830 Rankweil bietet darüber hinaus zum Einbringen eines gestuften Dämmstoffdübels ein Stufenbohrwerkzeug an (vgl. EVOlution - Der Dübelstick, Die neue Generation der Dämmstoffbefestigung, Technisches Merkblatt / Ausgabe 03/2021). Das Stufenbohrwerkzeug weist einen Adapter mit Fräskopf, einen wechselbaren Steinbohrer, eine Antriebsstange und einen SDS-Antriebsschaft zur Verbindung mit einer Bohrmaschine auf. An den SDS-Schaft schließt sich die Antriebsstange an, die in den Adapter mit einer als Hohlkegel ausgebildeten Werkzeugaufnahme übergeht. Die Werkzeugaufnahme nimmt einen als Morsekegel ausgebildeten Bohrerschaft des Steinbohrers auf. Die Drehmomentübertragung von dem Hohlkegel der Werkzeugaufnahme auf den darin klemmenden Morsekegel erfolgt ausschließlich reibschlüssig in Folge der Selbsthemmung. Zum Trennen des Bohrers hat der Adapter eine Queröffnung, durch die ein Keil eingetrieben werden muss, um den Morsekegel aus der Werkzeugaufnahme auszutreiben. Beim Austreiben kann der gesamte Adapter mit Fräskopf derart beschädigt werden, dass das Stufenbohrwerkzeug nicht mehr weiter verwendbar ist.

Die DE 20 2008 011 892 U1 offenbart ein dreistufiges Stufenbohrwerkzeug zum Einbringen von Bohrlöchern mit unterschiedlichen Durchmessern in einen Untergrund und eine an dem Untergrund anliegende Dämmstoffschicht.

Das Stufenbohrwerkzeug verfügt über einen Antriebsschaft, eingerichtet um das Stufenbohrwerkzeug mit dem Antrieb einer Bohrmaschine zu verbinden. Der Bohrer verfügt über einen Bohrkopf und einen Bohrerschaft, wobei der Bohrkopf eine erste Stufe des Stufenbohrwerkzeuges bildet. Zwischen dem Bohrkopf und dem Bohrerschaft sind zwei Schneiden angeordnet, die die zweite Stufe des Bohrers bilden. Ein Adapter weist eine als Schnellverschluss ausgeführte Werkzeugaufnahme für den zylindrischen Bohrerschaft des Bohrers auf. Ein an dem Adapter angeordnetes Fräswerkzeug bildet die dritte Stufe des Stufenbohrwerkzeuges. Der Antriebsschaft ist mit dem Adapter verbunden.

Zur Drehmomentübertragung auf einen Bohrer sind SDS-Bohrerschaft-Systeme mit einem Adapter beispielsweise aus der WO 2019/074871 A1 bekannt, wobei in dem Bohrerschaft des Bohrers mehrere offene Nuten in Richtung der Werkzeuglängsachse verlaufen und in jede der offenen Nuten mindestens ein an einem Adapter befestigter Mitnehmer formschlüssig eingreift. Zur Bohrerverriegelung weist der Bohrerschaft mehrere geschlossene Nuten auf, die in Richtung der Werkzeuglängsachse verlaufen, wobei in jede der geschlossenen Nuten jeweils ein Verriegelungselement zeitweilig in Eingriff bringbar ist, das in radialer Richtung zu der Werkzeuglängsachse beweglich und in Richtung der Werkzeuglängsachse unbeweglich an dem Adapter angeordnet ist. Ausgehend von diesem Stand der Technik liegt der Erfindung die Aufgabe zugrunde, ein Stufenbohrwerkzeug der eingangs erwähnten Art zu schaffen, welches einen problemlosen, insbesondere zerstörungsfreien Austausch des Bohrers der ersten Stufe auch beim Schlagbohren erlaubt. Zugleich sollen die Betriebskosten des Stufenbohrwerkzeugs beim Einbringen von Bohrlöchern in einen Untergrund und eine an dem Untergrund anliegende Dämmstoffschicht reduziert werden. Diese Aufgabe wird durch ein Stufenbohrwerkzeug mit den Merkmalen des Anspruchs 1 gelöst.

Unter einer offenen Nut in Richtung der Werkzeuglängsachse wird eine Nut verstanden, die an der Stirnseite des Einsteckendes des Bohrerschafts offen ist. Unter einer geschlossenen Nut wird eine in Richtung der Werkzeuglängsachse verlaufende, vollständig in die Mantelfläche des zylindrischen Einsteckendes eingebettete Nut verstanden.

Die Ausbildung des Bohrerschafts als zylindrisches Einsteckende sowie die Ausbildung der Werkzeugaufnahme als Hohlzylinder in dem Adapter in Verbindung mit der Trennung der Funktionen der Drehmomentübertragung und der Bohrerverriegelung zwischen dem Einsteckende und dem Adapter bewirken, dass selbst bei einem schlagenden Bohren der Bohrer stets einfach gelöst und ausgetauscht werden kann.

Die Bohrerverriegelung ist derart ausgebildet, dass das Verriegelungselement zwar in die geschlossene Nut eingreift, jedoch keine Klemmwirkung auf das Einsteckende des Bohrers ausübt. Infolge dessen übernimmt das Verriegelungselement die Funktion einer axialen Sicherung des Bohrers in dem Adapter, ohne jedoch eine Relativbewegung in Richtung der Werkzeuglängsachse zwischen dem Verriegelungselement und der geschlossenen Nut zu unterbinden.

Das erfindungsgemäße Stufenbohrwerkzeug erlaubt insbesondere die Verwendung von herkömmlichen Stein- oder Betonbohrern mit einem SDS-Bohrerschaft oder einem SDS-Plus-Bohrerschaft, die in die Werkzeugaufnahme des Adapters einsetzbar sind. Die Erfindung ermöglicht daher den Einsatz preiswerter, gut verfügbarer Standardbohrer und reduziert damit die Betriebskosten des Stufenbohrwerkzeuges.

Das erfindungsgemäße, platzsparende, bei einem Tausch des Bohrers einfach zu handhabende und nicht über das Außenmaß der weiteren Stufen des Stufenbohrwerkzeuges hinausgehende Verriegelungselement zeichnet sich dadurch aus, dass
- jedes Verriegelungselement als Gewindestift mit einem Drehantrieb an einem freien Ende und einem gewindefreien, endseitig verrundeten Zapfen an einem vorderen Ende des Gewindestiftes ausgebildet ist,
- der Gewindestift in ein Sacklochgewinde bis zur Anlage an einer Grundfläche einschraubbar ist, wobei das Sacklochgewinde in radialer Richtung zu der Werkzeuglängsachse verlaufend in der Wand des Adapters angeordnet ist,
- sich ein im Durchmesser kleinerer Durchgang von der Grundfläche des Sacklochgewindes bis zu der hohlzylindrischen Werkzeugaufnahme erstreckt, wobei der Durchgang in radialer Richtung zu der Werkzeuglängsachse in der Wand des Adapters angeordnet ist,
- wobei der verrundete Zapfen in die geschlossene Nut durch Einschrauben des Gewindestiftes bis zur Anlage an der Grundfläche des Sacklochgewindes zeitweilig in Eingriff bringbar ist, ohne dass der Zapfen eine Klemmwirkung auf das Einsteckende des Bohrers ausübt.

Wenn der verrundete Zapfen in die geschlossene Nut eingreift, weist dessen verrundetes Ende stets ein Abstand zu dem Nutgrund auf, sodass der Zapfen keine Klemmwirkung auf das Einsteckende des Bohrers ausübt. Infolge dessen bleibt ein Axialspiel des Bohrers, durch Relativbewegung des Zapfens gegenüber der geschlossenen Nut gewährleistet. Dieses Axialspiel trägt maßgeblich dazu bei, dass sich der Gewindestift beim Schlagbohren nicht löst und beim Drehbohren nicht festsetzt.

Konstruktiv vorteilhaft ist jeder Mitnehmer zur Drehmomentübertragung zwischen dem Einsteckende und der Werkzeugaufnahme als Stift ausgeführt, der sich in radialer Richtung zu der Werkzeuglängsachse erstreckt, an dem Adapter befestigt ist und formschlüssig in die offene Nut eingreift. Die Befestigung an dem Adapter kann beispielsweise dadurch erfolgen, dass die Stifte mittels einer Presspassung in entsprechende Durchgänge in der Wand des Adapters eingesetzt werden und endseitig in den die Werkzeugaufnahme bildenden Hohlzylinder so weit hineinragen, dass das Einsteckende mit den offenen Nuten durch die Stiftenden geführt in die Werkzeugaufnahme einsteckbar ist.

Die mindestens eine an dem Adapter angeordnete weitere Stufe des Stufenbohrwerkzeugs ist als Fräswerkzeug, vorzugsweise als Stirn-Umfangsfräser, auch als Fräskopf bezeichnet, ausgebildet.

Das mindestens eine Fräswerkzeug ist vorzugsweise lösbar mit dem Adapter verbunden und weist einen Werkzeugkörper auf, der die spanabhebenden Schneiden trägt. Die lösbare Verbindung zwischen dem Adapter und dem Fräswerkzeug umfasst vorzugsweise mindestens ein Außengewinde und ein in den Werkzeugkörper des Fräswerkzeuges angeordnetes Innengewinde. Das Außengewinde kann sich an der Mantelfläche des Adapters und/oder einem stirnseitig im Durchmesser reduzierten Stutzen des Adapters befinden. Auf den Stutzen kann beispielsweise das Fräswerkzeug für eine zweite Stufe und, soweit vorhanden, auf das Außengewinde an der Mantelfläche des Adapters ein im Außenmaß größeres Fräswerkzeug für eine dritte Stufe aufgeschraubt werden.

Um mit dem Stufenbohrwerkzeug unterschiedlich tiefe, gestufte Bohrungen einbringen zu können, ist in einer vorteilhaften Ausgestaltung der Erfindung die Antriebsstange lösbar mit dem Adapter und vorzugsweise auch lösbar mit dem Antriebsschaft verbunden. Abhängig von der Bohrlochtiefe verbindet eine in der Länge an die Bohrlochtiefe angepasste Antriebsstange den Antriebsschaft und den Adapter miteinander. Eine weitere Möglichkeit zur Längenanpassung der Antriebsstange besteht darin, dass die Antriebsstange mehrteilig ist und die mehreren Teile lösbar miteinander verbunden sind. Die Längenanpassung kann dann durch Verbinden einer unterschiedlichen Anzahl von Teilen der Antriebsstange bewerkstelligt werden.

Sofern der Antriebsschaft lösbar mit der Antriebsstange verbunden ist, können die einzelnen Komponenten des Stufenbohrwerkzeugs, d.h**.** Bohrer, Adapter, Antriebsstange bzw. Teile der Antriebsstange und Antriebsschaft auf der Baustelle nach Art eines Baukastens bedarfsgerecht zusammengefügt werden. Abhängig von der verfügbaren Werkzeugaufnahme der Bohrmaschine kann der Antriebsschaft beispielsweise zylinderförmig, als Mehrkant oder SDS-Schaft ausgebildet sein.

Die lösbare Verbindung zwischen Antriebsstange und dem Adapter und zwischen Antriebsstange und Antriebsschaft ist vorzugsweise eine Schraubverbindung. Die Schraubverbindung erfolgt aus Stabilitätsgründen vorzugsweise durch Gewindestangen, die jeweils in Innengewinde an den Enden der beiden Verbindungspartner eingreifen. Abhängig von dem Material können jedoch auch Außen- und Innengewinde an den Enden der Verbindungspartner vorgesehen sein.

Um die maximale Bohrlochtiefe beim Einbringen der Stufenbohrung zu begrenzen, ist in vorteilhafter Ausgestaltung der Erfindung an der Antriebsstange ein Anschlag in Richtung der Werkzeuglängsachse verschieblich und arretierbar angeordnet. Die Antriebsstange kann beispielsweise mehrere im Abstand und parallel zueinander angeordnete, ringförmige Vertiefungen aufweisen, in die an dem Tiefenanschlag angeordnete Rastmittel eingreifen.

Als Materialien für das Stufenbohrwerkzeug kommen Schnellarbeitsstahl (HSS) sowie für die Schneiden der ersten Stufe Hartmetall, Bornitrid oder Diamant in Betracht.

Nachfolgend wird die Erfindung anhand der Zeichnungen näher erläutert. Es zeigen
- **Figur 1**: eine Explosionsdarstellung eines erfindungsgemäßen, zweistufigen Stufenbohrwerkzeugs,
- **Figur 2a,b**: eine perspektivische Ansicht des zusammengebauten Stufenbohrwerkzeugs nach Figur 1,
- **Figur 3a**: einen Schnitt durch einen Adapter sowie einen Bohrer des Stufenbohrwerkzeugs nach Figur 1,
- **Figur 3b**: eine vergrößerte Darstellung des Details B nach Figur 3a,
- **Figur 3c**: eine Seitenansicht eines Adapters mit einem in der Werkzeugaufnahme aufgenommenen Bohrer eines Stufenbohrwerkzeugs nach Figur 1,
- **Figur 3d**: einen Schnitt entlang der Linie C-C nach Figur 3c,
- **Figur 4a**: eine zweite Ausführungsform eines Adapters mit eingesetztem Bohrer für ein Stufenbohrwerkzeug mit drei Stufen sowie
- **Figur 4b**: eine Detaildarstellung ausschließlich des Adapters der Ausführungsform nach Figur 4a.

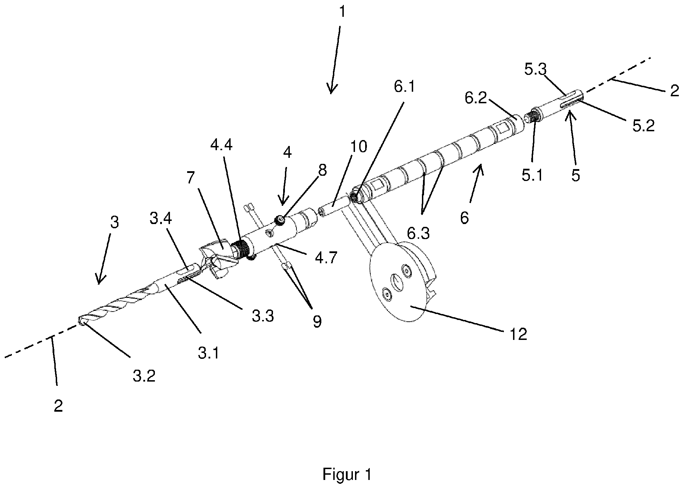

Figur 1 zeigt ein zweistufiges Stufenbohrwerkzeuges (1) mit einer Werkzeuglängsachse (2) zum Einbringen von Bohrlöchern mit unterschiedlichen Durchmessern in einen Untergrund und eine an dem Untergrund anliegende Dämmstoffschicht eines Wärmedämmverbundsystems. Das Stufenbohrwerkzeug (1) umfasst als wesentliche Komponenten einen Bohrer (3), einen Adapter (4), einen Antriebsschaft (5), um das Stufenbohrwerkzeug (1) mit dem nicht dargestellten Abtrieb einer Bohrmaschine zu verbinden, sowie eine Antriebsstange (6), die den Antriebsschaft (5) und den Adapter (4) miteinander verbindet.

Der Bohrer (3) besteht aus einem Bohrerschaft (3.1) und einem Bohrkopf (3.2). Im Ausführungsbeispiel ist ein handelsüblicher Spiralbohrer mit SDS-Bohrerschaft dargestellt. Der Bohrerschaft (3.1) ist als zylindrisches Einsteckende ausgebildet. Zur Drehmomentübertragung sind in dem Einsteckende zwei diametral gegenüberliegende, offene Nuten (3.3) eingebracht. Darüber hinaus sind in das Einsteckende zwei gegenüberliegende, geschlossene Nuten (3.4) eingebracht. Die geschlossenen Nuten (3.4) sind um 90 Grad versetzt zu den offenen Nuten (3.3) am Umfang des Bohrerschafts (3.1) angeordnet und erstrecken sich wie die offenen Nuten (3.3) in Richtung der Werkzeuglängsachse (2). Die offenen Nuten (3.3) sind zum Ende des Bohrerschafts (3.1) hin geöffnet.

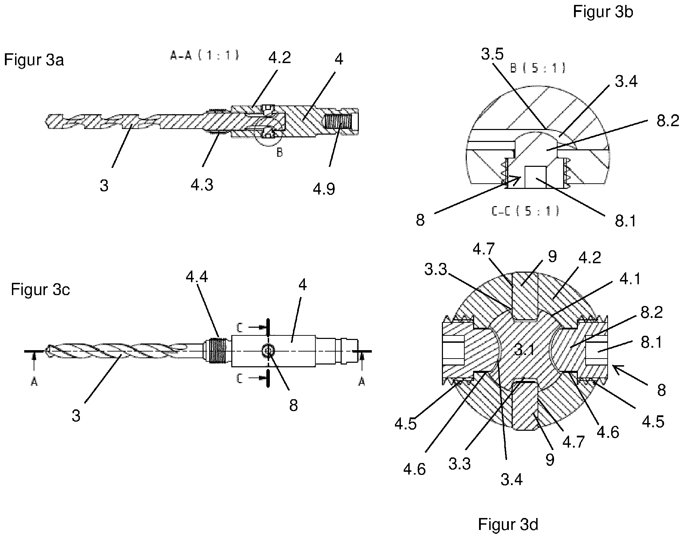

Der Adapter (4) verfügt, wie dies insbesondere aus Figuren 3a, 3d erkennbar ist, eine als Hohlzylinder ausgebildete Werkzeugaufnahme (4.1), die das Einsteckende des Bohrers (3) aufnimmt. Die hohlzylindrische Werkzeugaufnahme (4.1) wird durch eine ringförmige Wand (4.2) begrenzt, die sich stirnseitig zu einem rohrförmigen Stutzen (4.3) mit einem Außengewinde (4.4) verjüngt.

Wie aus Figur 1 erkennbar ist auf das Außengewinde (4.4) ein Fräswerkzeug (7) mit einem korrespondierenden Innengewinde aufschraubbar. Das Fräswerkzeug (7) bildet die zweite Stufe des Stufenbohrwerkzeugs (1).

Aus Figur 1 in Verbindung mit den Figuren 3b, 3d ist weiter erkennbar, dass in der Wand (4.2) des Adapters (4) zwei Sacklochgewinde (4.5) angeordnet sind. Von einer Grundfläche des Sacklochgewindes (4.5) erstreckt sich ein im Durchmesser kleinerer, gewindefreier Durchgang (4.6) bis zu der hohlzylindrischen Werkzeugaufnahme (4.1). Sowohl das Sacklochgewinde (4.5) als auch der Durchgang (4.6) sind in radialer Richtung zu der Werkzeuglängsachse (2) angeordnet. Des Weiteren sind in der Wand (4.2) des Adapters (4) in gegenüberliegend jeweils zwei Stiftaufnahmen (4.7) angeordnet.

In jedes der beiden Sacklochgewinde (4.5) ist ein Gewindestift (8) bis zur Anlage an der Grundfläche des Sacklochgewindes (4.5) einschraubbar. Der Gewindestift (8) weist an seinem freien Ende einen Drehantrieb (8.1), beispielsweise für einen Torx-Antrieb, und an einem vorderen Ende einen gewindefreien, endseitig verrundeten Zapfen (8.2) auf. Der Zapfen (8.2) wird von einem an einer Stirnseite durch eine Kalotte begrenzten zylindrischen Stift gebildet. Durch Einschrauben des Gewindestiftes (8) bis zur Anlage an der Grundfläche des Sacklochgewindes (4.5) gelangt der verrundete Zapfen (8.2) in eine der beiden geschlossenen Nuten (3.4) in dem Bohrerschaft (3.1), wie dies aus den Figuren 3b, 3d erkennbar ist. Bei vollständig, d.h. bis zum Anschlag an der Grundfläche eingeschraubtem Gewindestift (8) verbleibt, wie dies insbesondere aus Figur 3b erkennbar ist, ein Spalt zwischen der Kalotte des Zapfens (8.2) und dem Nutgrund (3.5). Der Zapfen (8.2) des Gewindestiftes (8) übt daher keine Klemmwirkung auf das Einsteckende des Bohrers (3) aus, sodass der Bohrer (3) in Axialrichtung begrenzt durch die geschlossene Nut (3.4) beweglich, jedoch unverlierbar in dem Adapter (4) gehalten wird.

In die Stiftaufnahmen (4.7) in der Wand (4.2) des Adapters (4) sind als Mitnehmer Stifte (9) eingesetzt, die sich in radialer Richtung zu der Werkzeuglängsachse (2) in die hohlzylindrische Werkzeugaufnahme (4.1) hinein erstrecken und dabei formschlüssig jeweils in eine der beiden offenen Nuten (3.3) des Einsteckendes des Bohrers (3) eingreifen. Über die beiden, diametral gegenüberliegend in den Aufnahmen (4.7) angeordnete Stifte (9) wird von dem im Bohrbetrieb rotierenden Adapter (4) das Drehmoment auf den Bohrerschaft (3.1) des Bohrers (3) übertragen.

Ist der Bohrkopf (3.2) des Bohrers (3) verschlissen, bevor die Schneiden des Fräswerkzeugs (7)verschlissen sind, kann der Bohrer (3) durch einen handelsüblichen Bohrer (3) mit SDS-Schaft problemlos ausgetauscht werden, indem die Gewindestifte (8) auf beiden Seiten des Adapters mithilfe des Drehantriebs (8.1) zeitweilig ausgeschraubt werden, sodass der Zapfen (8.2) der beiden Gewindestifte (8) die zur Axialsicherung vorgesehenen geschlossenen Nuten (3.4) in dem Einsteckende des Bohrers (3) freigibt. Nach dem Ausschrauben der Gewindestifte (8) kann das Einsteckende des Bohrers (3) aus der Werkzeugaufnahme (4.1) herausgezogen werden, wobei die Stifte (9) aus den offenen Nuten (3.3) in dem Einsteckende herausgleiten. Nach dem Einstecken des Einsteckendes eines neuen Bohrers (3) werden die Gewindestifte (8) bis zur Anlage an der Grundfläche des Sacklochgewindes (4.5) eingeschraubt und dadurch der neue Bohrer (3) unverlierbar in der Werkzeugaufnahme (4.1) gesichert.

Aus Figur 1 ist weiter erkennbar, dass die Antriebsstange (6) lösbar sowohl mit dem Antriebsschaft (5) als auch lösbar mit dem Adapter (4) verbunden ist. Die lösbare Verbindung an beiden Seiten der Antriebsstange (6) ist eine Schraubverbindung. Die Schraubverbindung zwischen Adapter (4) und Antriebsstange (6) umfasst eine Gewindestange (10), die einerseits in ein Innengewinde (4.9) am rückwärtigen Ende des Adapters (4) (vgl. Figur 3a) sowie ein Innengewinde (6.1) an der Vorderseite der Antriebsstange (6) eingreift (vgl. Figur 1). An der Rückseite der Antriebsstange (6) ist ein weiteres Innengewinde (6.2), in die ein an der Vorderseite des Antriebsschafts (5) angeordnetes Außengewinde (5.1) einschraubbar ist.

Zur Längenanpassung des Stufenbohrwerkzeuges (1) an unterschiedlich dicke Dämmschichten kann die Gewindestange (10) durch eine längere oder kürzere Gewindestange (10) ausgetauscht werden.

Der Antriebsschaft (5) ist im vorliegenden Ausführungsbeispiel als SDS-Schaft für eine entsprechende Aufnahme in einer Bohrmaschine ausgestaltet und weist daher entsprechend dem Bohrerschaft (3.1) zwei gegenüberliegende offene Nuten (5.2) und zwei gegenüberliegend angeordnete geschlossene Nuten (5.3) auf.

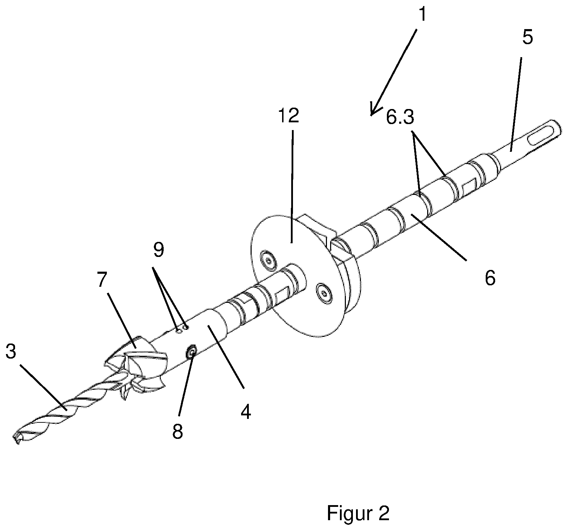

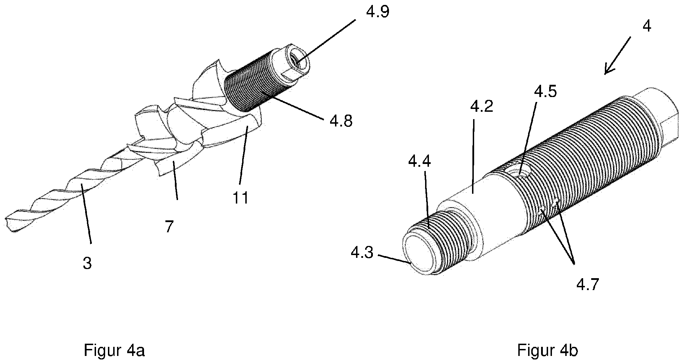

Figuren 4a, 4b zeigen einen gegenüber dem Ausführungsbeispiel nach Figuren 1 -3 modifizierten Adapter (4), der für ein dreistufiges Stufenbohrwerkzeug (1) erforderlich ist. Abweichend zu dem Ausführungsbeispiel nach den Figuren 1-3 ist nicht nur auf das Außengewinde (4.4) des rohrförmigen Stutzens (4.3) ein erstes Fräswerkzeug (7) zur Ausbildung der zweiten Stufe, sondern darüber hinaus auf ein weiteres Außengewinde (4.8) an der Mantelfläche des zylindrischen Adapters (4) ein weiteres Fräswerkzeug (11) zur Ausbildung der dritten Stufe aufgeschraubt. Das weitere, die dritte Stufe bildende Fräswerkzeug (11) weist ein größeres Außenmaß als das Fräswerkzeug (7) für die zweite Stufe auf, entsprechend dem benötigten Bohrlochdurchmesser der dritten Stufe.

Um das weitere Fräswerkzeug (11) bis zum vorderen Ende des weiteren Außengewindes (4.8) aufschrauben zu können, ist es erforderlich, dass der eingeschraubte Gewindestift (8) mit der Mantelfläche des Adapters (4) abschließt, da die Sacklochgewinde (4.5) im Bereich des weiteren Außengewindes (4.8) liegen. Dasselbe gilt für die in die Aufnahmen (4.7) eingebrachten Stifte (9).

Im Übrigen stimmt der Aufbau des dreistufigen Stufenbohrwerkzeugs (1) unter Verwendung des Adapters (4) nach Figuren 4a, 4b mit dem Stufenbohrwerkzeug (1) nach Figuren 1-3 überein, sodass vollumfänglich auf die diesbezüglichen Erläuterungen verwiesen wird.

Optional kann unabhängig von der zwei- oder dreistufigen Ausführungsform des Stufenbohrwerkzeugs (1) an dessen Antriebsstange (6) ein Tiefenanschlag (12) zur Bohrlochtiefenbegrenzung in Richtung der Werkzeuglängsachse (2) verschieblich und arretierbar angeordnet sein. Die Antriebsstange (6) weist zu diesem Zweck mehrere im Abstand zueinander angeordnete, ringförmige Vertiefungen (6.3) auf, wobei nach Einstellung des Tiefenanschlags (12) ein an diesem angeordnetes Rastmittel in die ringförmige Vertiefung (6.3) eingreift und dadurch den Tiefenanschlag arretiert.

| Nr. | **Bezeichnung** |
|---|---|
| 1. | Stufenbohrwerkzeug |
| 2. | Werkzeuglängsachse |
| 3. | Bohrer |
| 3.1 | Bohrerschaft |
| 3.2 | Bohrkopf |
| 3.3 | Offene Nut |
| 3.4 | Geschlossene Nut |
| 3.5 | Nutgrund |
| 4. | Adapter |
| 4.1 | Werkzeugaufnahme |
| 4.2 | Wand |
| 4.3 | Stutzen |
| 4.4 | Außengewinde |
| 4.5 | Sacklochgewinde |
| 4.6 | Durchgang |
| 4.7 | Aufnahme |
| 4.8 | Weiteres Außengewinde |
| 4.9 | Innengewinde |
| 5. | Antriebsschaft |
| 5.1 | Außengewinde |
| 5.2 | Offene Nut |
| 5.3 | Geschlossene Nut |
| 6. | Antriebsstange |
| 6.1 | Innengewinde |
| 6.2 | Innengewinde |
| 6.3 | Ringförmige Vertiefung |
| 7. | Fräswerkzeug (2.Stufe) |
| 8. | Gewindestift |
| 8.1 | Drehantrieb |
| 8.2 | Zapfen |
| 9. | Stift |
| 10. | Gewindestange |
| 11. | Fräswerkzeug (3. Stufe) |
| 12 | Tiefenanschlag |

## Patentansprüche

1. Stufenbohrwerkzeug (1) mit einer Werkzeuglängsachse (2) zum Einbringen von Bohrlöchern mit unterschiedlichen Durchmessern in einen Untergrund und eine an dem Untergrund anliegende Dämmstoffschicht eines Wärmedämmverbundsystems, umfassend
- einen Antriebsschaft (5), eingerichtet um das Stufenbohrwerkzeug (1) mit dem Abtrieb einer Bohrmaschine zu verbinden,
- einen Bohrer (3) mit einem Bohrkopf (3.2) und einem Bohrerschaft (3.1), wobei der Bohrkopf (3.2) eine erste Stufe des Stufenbohrwerkzeugs bildet,
- einen Adapter (4) mit einer Werkzeugaufnahme (4.1) für den Bohrerschaft (3.1),
- mindestens ein an dem Adapter (4) angeordnetes Fräswerkzeug (7,11), wobei jedes Fräswerkzeug (7,11) eine weitere Stufe des Stufenbohrwerkszeugs (1) bildet,
- eine Antriebsstange (6), die den Antriebsschaft (5) und den Adapter (4) miteinander verbindet,
- der Bohrerschaft (3.1) als zylindrisches Einsteckende ausgebildet ist,
- die das Einsteckende aufnehmende Werkzeugaufnahme (4.1) als Hohlzylinder in dem Adapter (4) ausgebildet ist,
**dadurch gekennzeichnet, dass**
- zur Drehmomentübertragung in dem Einsteckende mehrere offene Nuten (3.3) in Richtung der Werkzeuglängsachse (2) verlaufen, wobei in jede der offenen Nuten (3.3) mindestens ein an dem Adapter (4 ) befestigter Mitnehmer (9) formschlüssig eingreift,
- zur Bohrerverriegelung in dem Einsteckende mehrere geschlossene Nuten (3.4) in Richtung der Werkzeuglängsachse (2) verlaufen, wobei in jede der geschlossenen Nuten (3.4) jeweils ein Verriegelungselement (8) zeitweilig in Eingriff bringbar ist, das in radialer Richtung zu der Werkzeuglängsachse (2) beweglich und in Richtung der Werkzeuglängsachse (2) unbeweglich an dem Adapter angeordnet ist,
- jedes Verriegelungselement (8) als Gewindestift(8) mit einem Drehantrieb (8.1) an einem freien Ende und einem gewindefreien, endseitig verrundeten Zapfen (8.2) an einem vorderen Ende des Gewindestiftes ausgebildet ist,
- der Gewindestift (8) in ein Sacklochgewinde (4.5) bis zur Anlage an einer Grundfläche einschraubbar ist, wobei das Sacklochgewinde (4.5) in radialer Richtung zu der Werkzeuglängsachse (2) in der Wand (4.2) des Adapters (4) angeordnet ist,
- sich ein im Durchmesser kleinerer Durchgang (4.6) von der Grundfläche bis zu der hohlzylindrischen Werkzeugaufnahme (4.1) erstreckt, wobei der Durchgang (4.6) in radialer Richtung zu der Werkzeuglängsachse (2) in der Wand (4.2) des Adapters (4) angeordnet ist,
- wobei der verrundete Zapfen (8.2) in die geschlossene Nut (3.4) durch Einschrauben des Gewindestiftes (8) bis zur Anlage an der Grundfläche des Sacklochgewindes (4.5) zeitweilig in Eingriff bringbar ist, ohne dass der Zapfen (8.2) eine Klemmwirkung auf das Einsteckende des Bohrers (3) ausübt.

2. Stufenbohrwerkzeug (1) nach Anspruch 1, **dadurch gekennzeichnet, dass** der Bohrer (3) einen SDS-Bohrerschaft oder einen SDS-plus-Bohrerschaft aufweist.

3. Stufenbohrwerkzeug nach Anspruch 1 oder 2, **dadurch gekennzeichnet, dass** jeder Mitnehmer (9) als Stift (9) ausgeführt ist, der sich in radialer Richtung zu der Werkzeuglängsachse (2) erstreckt, an dem Adapter (4) befestigt ist und formschlüssig in die offene Nut (3.3) eingreift.

4. Stufenbohrwerkzeug nach einem der Ansprüche 1 bis 3, **dadurch gekennzeichnet, dass** das mindestens eine Fräswerkzeug (7,11) lösbar mit dem Adapter (4) verbunden ist.

5. Stufenbohrwerkzeug nach Anspruch 4, **dadurch gekennzeichnet, dass** die lösbare Verbindung mindestens ein Außengewinde (4.4, 4.8) an einer zylindrischen Oberfläche des Adapters (4) und ein Innengewinde in jedem Fräswerkzeug (7,11) umfasst.

6. Stufenbohrwerkzeug nach einem der Ansprüche 1 bis 5, **dadurch gekennzeichnet, dass** die Antriebsstange (6) lösbar mit dem Adapter (4) und/oder lösbar mit dem Antriebsschaft (5) verbunden ist.

7. Stufenbohrwerkzeug nach einem der Ansprüche 1 bis 6, **dadurch gekennzeichnet, dass** die Antriebsstange (6) mehrteilig ist und die mehreren Teile lösbar miteinander verbunden sind.

8. Stufenbohrwerkzeug nach Anspruch 6 oder 7, **dadurch gekennzeichnet, dass** die lösbare Verbindung eine Schraubverbindung (4.9,5.1,6.1,10) ist.

9. Stufenbohrwerkzeug nach einem der Ansprüche 1 bis 8, **dadurch gekennzeichnet, dass** an der Antriebsstange ein Tiefenanschlag (12) zur Bohrlochtiefenbegrenzung in Richtung der Werkzeuglängsachse (2) verschieblich und arretierbar angeordnet ist.

## Claims

1. Step drilling tool (1) with a tool longitudinal axis (2) for introducing drilled holes having different diameters into a substrate and an insulating layer of a thermal insulation composite system adjacent to the substrate, comprising
- a drive shaft (5) designed to connect the step drilling tool (1) to the output of a drilling machine,
- a drill (3) with a drill head (3.2) and a drill shank (3.1), wherein the drill head (3.2) forms a first stage of the step drilling tool,
- an adapter (4) with a tool holder (4.1) for the drill shank (3.1),
- at least one milling tool (7, 11) arranged on the adapter (4), wherein each milling tool (7, 11) forms a further stage of the step drilling tool (1),
- a drive rod (6) that connects the drive shaft (5) and the adapter (4),
- the drill shank (3.1) is configured as a cylindrical insertion end,
- the tool holder (4.1) receiving the insertion end is configured as a hollow cylinder in the adapter (4),
**characterized in that**
- for torque transmission several open grooves (3.3) extend in the insertion end in the direction of the tool longitudinal axis (2), wherein at least one driver (9) attached to the adapter (4) engages positively in each of the open grooves (3.3),
- for drill locking in the insertion end several closed grooves (3.4) extend in the direction of the tool longitudinal axis (2), wherein respectively one locking element (8) can be temporarily brought into engagement in each of the closed grooves (3.4), which locking element is arranged movably in the radial direction with respect to the tool longitudinal axis (2) and immovably in the direction of the tool longitudinal axis (2) on the adapter,
- each locking element (8) is configured as a threaded pin (8) with a rotary drive (8.1) at a free end and a threadless, rounded-end pin (8.2) at a front end of the threaded pin,
- the threaded pin (8) can be screwed into a blind hole thread (4.5) until it abuts against a base surface, wherein the blind hole thread (4.5) is arranged in a radial direction with respect to the tool longitudinal axis (2) in the wall (4.2) of the adapter (4),
- a smaller-diameter passage (4.6) extends from the base surface to the hollow cylindrical tool holder (4.1), wherein the passage (4.6) is arranged in the wall (4.2) of the adapter (4) in a radial direction with respect to the tool longitudinal axis (2),
- wherein the rounded pin (8.2) can be temporarily brought into engagement in the closed groove (3.4) by screwing in the threaded pin (8) until it rests against the base surface of the blind hole thread (4.5), without the pin (8.2) exerting a clamping effect on the insertion end of the drill (3).

2. Step drilling tool (1) according to Claim 1, **characterized in that** the drill (3) has an SDS drill shank or an SDS-plus drill shank.

3. Step drilling tool (1) according to Claim 1 or 2, **characterized in that** each driver (9) is designed as a pin (9) which extends in a radial direction with respect to the tool longitudinal axis (2), is attached to the adapter (4) and engages in a form-fitting manner in the open groove (3.3).

4. Step drilling tool according to one of Claims 1 to 3, **characterized in that** the at least one milling tool (7, 11) is detachably connected to the adapter (4).

5. Step tool according to Claim 4, **characterized in that** the detachable connection comprises at least one external thread (4.4, 4.8) on a cylindrical surface of the adapter (4) and one internal thread in each milling tool (7, 11).

6. Step drilling tool according to one of Claims 1 to 5, **characterized in that** the drive rod (6) is detachably connected to the adapter (4) and/or detachably connected to the drive shaft (5).

7. Step drilling tool according to one of Claims 1 to 6, **characterized in that** the drive rod (6) is multi-part and the multiple parts are detachably connected to each other.

8. Step drilling tool according to Claim 6 or 7, **characterized in that** the detachable connection is a screw connection (4.9, 5.1, 6.1, 10).

9. Step drilling tool according to one of Claims 1 to 8, **characterized in that** a depth stop (12) for limiting the drilled hole depth is arranged on the drive rod displaceably and lockably in the direction of the tool longitudinal axis (2).

## Revendications

1. Outil de perçage étagé (1), doté d'un axe longitudinal (2) d'outil, destiné à ménager des trous de perçage de différents diamètres dans un support et dans une couche d'isolant thermique adjacente au support d'un système composite d'isolation thermique, comprenant
- une barre d'entraînement (5), configurée pour assembler l'outil de perçage étagé (1) avec la sortie d'une perceuse,
- un foret (3), doté d'une tête de perçage (3.2) et d'une queue de foret (3.1), la tête de perçage (3.2) constituant un premier étage de l'outil de perçage étagé,
- un adaptateur (4), doté d'un logement d'outil (4.1) pour la queue de foret (3.1),
- au moins un outil de fraisage (7, 11), placé sur l'adaptateur (4), chaque outil de fraisage (7, 11) constituant un autre étage de l'outil de perçage étagé (1),
- une barre d'entraînement (6), qui assemble l'un avec l'autre la barre d'entraînement (5) et l'adaptateur (4),
- la queue de foret (3.1) étant conçue sous la forme d'une extrémité cylindrique à enficher,
- le logement d'outil (4.1) recevant l'extrémité à enficher étant conçu sous la forme d'un cylindre creux dans l'adaptateur (4),
**caractérisé en ce que**
- pour transmettre le couple de rotation, plusieurs rainures (3.3) ouvertes s'écoulent dans l'extrémité à enficher dans la direction de l'axe longitudinal (2) d'outil, dans chacune des rainures (3.3) ouvertes s'engageant par complémentarité de forme au moins un entraîneur (9) fixé sur l'adaptateur (4),
- pour verrouiller le foret, plusieurs rainures (3.4) fermées s'écoulent dans l'extrémité à enficher, dans la direction de l'axe longitudinal (2) d'outil, dans chacune des rainures (3.4) fermées, étant susceptible d'être amené temporairement en engagement chaque fois un élément de verrouillage (8), qui est placé sur l'adaptateur en étant mobile dans la direction radiale par rapport à l'axe longitudinal (2) d'outil et en étant immobile dans la direction de l'axe longitudinal (2) d'outil,
- chaque élément de verrouillage (8) est conçu sous la forme d'une vis sans tête (8), dotée d'un entraînement en rotation (8.1) sur une extrémité libre et d'un tenon (8.2) non fileté, à bout arrondi sur une extrémité antérieure de la vis sans tête,
- la vis sans tête (8) peut se visser dans un taraudage borgne (4.5), jusqu'à venir s'appliquer sur une surface de fond, le taraudage borgne (4.5) étant placé en direction radiale par rapport à l'axe longitudinal (2) d'outil dans la paroi (4.2) de l'adaptateur (4),
- un passage (4.6) de diamètre plus petit s'étend de la surface de base jusqu'au logement d'outil (4.1) en forme de cylindre creux, le passage (4.6) étant placé en direction radiale par rapport à l'axe longitudinal (2) d'outil dans la paroi (4.2) de l'adaptateur (4),
- le tenon (8.2) arrondi est susceptible d'être amené temporairement en engagement dans la rainure fermée (3.4), par vissage de la vis sans tête (8) jusqu'à ce qu'elle vienne s'appliquer sur la surface de base du taraudage borgne (4.5), sans que le tenon (8.2) n'exerce un effet de serrage sur l'extrémité à enficher du foret (3).

2. Outil de perçage étagé (1) selon la revendication 1, **caractérisé en ce que** le foret (3) comporte une queue de foret SDS ou une queue de foret SDS-Plus.

3. Outil de perçage étagé selon la revendication 1 ou 2, **caractérisé en ce que** chaque entraîneur (9) est réalisé sous la forme d'une goupille (9) qui s'étend en direction radiale par rapport à l'axe longitudinal (2) d'outil, est fixé sur l'adaptateur (4) et s'engage par complémentarité de forme dans la rainure (3.3) ouverte.

4. Outil de perçage étagé selon l'une quelconque des revendications 1 à 3, **caractérisé en ce que** l'au moins un outil de fraisage (7, 11) est assemblé de manière amovible avec l'adaptateur (4).

5. Outil de perçage étagé selon la revendication 4, **caractérisé en ce que** l'assemblage amovible comprend au moins un filetage (4.4, 4.8) sur une surface cylindrique de l'adaptateur (4) et un taraudage dans chaque outil de fraisage (7, 11).

6. Outil de perçage étagé selon l'une quelconque des revendications 1 à 5, **caractérisé en ce que** la barre d'entraînement (6) est assemblée de manière amovible avec l'adaptateur (4) et / ou est assemblée de manière amovible avec la barre d'entraînement (5).

7. Outil de perçage étagé selon l'une quelconque des revendications 1 à 6, **caractérisé en ce que** la barre d'entraînement (6) est en plusieurs parties et les plusieurs parties sont assemblées les unes avec les autres de manière amovible.

8. Outil de perçage étagé selon la revendication 6 ou 7, **caractérisé en ce que** l'assemblage amovible est un assemblage vissé (4.9, 5.1, 6.1, 10).

9. Outil de perçage étagé selon l'une quelconque des revendications 1 à 8, **caractérisé en ce que** sur la barre d'entraînement, une butée en profondeur (12), destinée à limiter la profondeur du trou de perçage dans la direction de l'axe longitudinal (2) d'outil est placée de manière déplaçable et immobilisable.
